# EUROPÄISCHE PATENTSCHRIFT

(11) **EP 3 387 401 B1**
(45) Veröffentlichungstag und Bekanntmachung des Hinweises auf die Patenterteilung: **29.03.2023**
(21) Anmeldenummer: 16825324.3
(22) Anmeldetag: 09.12.2016
(51) Int. Cl.: A63B 24/00, A63B 69/00, A63B 71/06, A63B 69/18, A63C 11/04, A63C 11/26, G01L 1/14, G09B 19/00

(54) **MESSANORDNUNG ZUR UNTERSUCHUNG VON GLEITBRETTERN**
MEASURING ARRANGEMENT FOR TESTING SKIS AND SNOWBOARDS
SYSTÈME DE MESURE SERVANT À TESTER DES PLANCHES DE GLISSE

(30) Priorität: 09.12.2015 DE 102015015879
(43) Veröffentlichungstag der Anmeldung: 17.10.2018
(73) Patentinhaber: molibso Entwicklungs- und Vertriebs GmbH, 40764 Langenfeld (DE)
(72) Erfinder: HOLLENBACHER, Jens, 40764 Langenfeld (DE)
(74) Vertreter: Cohausz Hannig Borkowski Wißgott
(86) Internationale Anmeldenummer: PCT/EP2016/002072
(87) Internationale Veröffentlichungsnummer: WO 2017/097421

(56) Entgegenhaltungen:
- EP-A1- 1 510 236
- EP-A1- 1 510 236
- EP-A2- 0 919 267
- EP-A2- 0 919 267
- WO-A1-01/02823
- US-A- 6 052 114
- US-A- 6 052 114
- US-A1- 2004 055 396

## Beschreibung

Die Erfindung betrifft eine Messanordnung zur Untersuchung von Gleitbrettern oder flächig aufliegenden Sportgeräten, umfassend eine Sensorvorrichtung auf die zumindest ein mit einem Druck belastbares Gleitbrett auflegbar ist.

Die Fahreigenschaften von Gleitbrettern sind unter anderem davon abhängig, wie der Druck, der von einer Person auf das Gleitbrett ausgeübt wird, auf die Gleitfläche des Gleitbrettes verteilt ist. Es kann beispielsweise bei Langlaufskiern von Vorteil sein, wenn das Gewicht des Langläufers gleichmäßig über die gesamte Gleitfläche des Langlaufskis verteilt ist. Die Druckverteilung ist nicht nur von der Beschaffenheit des Gleitbrettes abhängig, sondern ergibt sich vielmehr durch die Kombination aus Gleitbrett, Ski-Schuh und individuellen physiologischen Merkmalen des Fahrers. Deshalb ist es insbesondere für Sport- und Skiverkaufsgeschäfte interessant, ein Gleitbrett in Kombination mit einem Schuhwerk direkt vor Ort individuell für den jeweiligen Kunden zu untersuchen, um auf Grundlage einer Messung ein optimales Gleitbrett für einen Kunden zur Verfügung zu stellen.

Aus der DE 25 12 279 A1 ist ein Ski-Testgerät für Sport- und Skiverkaufsgeschäfte bekannt, das die Torsions-Stabilität und Druckverteilung eines Skis hinter seiner Spitze und an seinem hinteren Ende misst. Der Ski liegt bei diesem Testgerät hinter seiner Spitze und an seinem hinteren Ende auf zwei Schlitten auf und wird mittig, in unmittelbarer Nähe der Position der Schuhe, mit einem Druckstempel belastet, wobei der Durchbiegewiderstand des Skis anhand einer von Hand bedienbaren Waage gemessen wird. Beim Verkauf eines Skis an einen Kunden, wird nach Auswahl der gewünschten Marke und Größe, das Gleitbrett auf das Testgerät gelegt und mit dem Druckstempel so lange belastet, bis das Gleitbrett im Mittelteil auf einen elektrischen Kontaktschalter aufliegt. Bei Berührung des Kontaktschalters sollte das mit der Waage gemessene aufgebrachte Gewicht dem Gewicht des Fahrers entsprechen, um sicherzustellen, dass der jeweilige Kunde bei einem Einsatz des Skis eine möglichst gleichmäßige Druckverteilung realisiert.

Die US 4 290 499 A beschreibt eine andere Ausführungsvariante einer Testeinrichtung für Skier, wobei ein Ski auf eine Auflagefläche gelegt wird, die mehrere Fühlerlehren mit Mikroschaltern aufweist. Sobald das Brett auf der Auflagefläche aufliegt, wird es zentral über einen Druckstempel belastet und das aufgebrachte Gewicht gemessen. Die Mikroschalter schalten bei einem vorher eingestellten Druck und registrieren, ob der Ski in dem Bereich des Mikroschalters mit dem entsprechenden Druck aufliegt oder aufgrund der Vorspannung des Skis weniger Druck ausübt oder gar nicht in Kontakt mit der Auflagefläche ist. Typischerweise wird der Ski mit einem Druck belastet, der dem Gewicht der Person entspricht, die diesen Ski erwerben möchte. Bei der Belastung des Skis durch den Kunden wird durch die Mikroschalter gemessen, in welchen Bereichen des Skis bei Belastung auf der Auflagefläche ein gewünschter Druck erzeugt ist. Auf diese Weise kann für den Kunden individuell ein optimaler Ski bestimmt werden.

Aus der US 6 052 114 A ist ein sogenannter "virtual reality body-sensing" Apparat bekannt, in dem sich ein Nutzer mit seinen Füßen auf eine Art Wackelbrett, der sogenannten "Riding Portion" des "Body-Sensing Portion" eines Ski-Simulator stellen kann. Mit Hilfe von vier Winkel- und zwei Drehmomentsensoren wird die Dreh- und Kippbewegung der "Body-Sensing Portion" in den verschiedenen Raum- und Winkelrichtungen ausgewertet.

In den EP 1 510 236 und EP 0 919 267 A2 sind ebenfalls Ski-Simulatoren offenbart, bei denen ein Nutzer auf bereits fest installierten Skiern jeweils eine Zentrifugalkraft durch seitliches Verkippen der Ski erfasst wird oder durch horizontales Verschieben und Drehen der Ski (bzw. Heben des Fußes) eine Abfahrt (mit Springen) simuliert wird.

Die Aufgabe der zugrundeliegenden Erfindung ist es, eine Messanordnung und ein Messverfahren zur Untersuchung von Gleitbrettern zur Verfügung zu stellen, die es auf einfache Weise mit geringen zeitlichem und apparativem Aufwand und ohne aufwändige Umrüstung ermöglichen, eine Kraftflächenverteilung und/oder Druckverteilung eines belasteten Gleitbrettes mit einer hohen Auflösung in Längs- und Querrichtung reproduzierbar zu bestimmen, um insbesondere ein Gleitbrett und/oder eine Fußaufnahmeeinheit individuell auf eine Person anzupassen.

Die Aufgabe wird erfindungsgemäß mittels einer Messanordnung mit den technischen Merkmalen des Anspruch 1 gelöst. Zudem ist erfindungsgemäß das Verfahren mit den Merkmalen des Anspruchs 7 zur Lösung der Aufgabe vorgesehen.

Die Messanordnung zur Lösung der Aufgabe ist dadurch gekennzeichnet, dass das Gleitbrett zumindest abschnittsweise mit einem Druck belastbar ist, der durch das Gewicht einer Person erzeugt ist, und die Sensorvorrichtung eine Sensorfläche aufweist, die zumindest überwiegend in eine Vielzahl von Sensorflächenabschnitten in Längs- und Querrichtung aufgeteilt ist, wobei die Sensorflächenabschnitte jeweils zumindest einen Kraftsensor aufweisen, der die von der Person erzeugte auf den Sensorflächenabschnitt wirkende Kraft als ein elektrisches Signal ausgibt, das von einer Rechnereinheit auswertbar ist. Hierbei weist die Messanordnung eine Sensorfläche auf, die mittels einer Neigungsvorrichtung gegenüber einer Längsachse und/oder einer Querachse neigbar ist.

Dadurch, dass die Sensorfläche gegenüber der Horizontalen geneigt werden kann, lassen sich bestimmte Neigungen einer Ski-Strecke simulieren, so dass auch die Druckverteilung des Skis bei realistischen Bedingungen messbar ist. Insbesondere lässt sich die Neigung in Abhängigkeit des untersuchenden Gleitbretts variieren. Beispielsweise wird ein Langlaufski typischerweise bei geringen Neigung verwendet, wohingegen ein Sprungski bei einer großen Neigung verwendet wird.

Die Messanordnung weist eine Sensorfläche auf, die mittels einer Neigungsvorrichtung gegenüber einer Längsachse und/oder einer Querachse neigbar ist. Die Neigungsvorrichtung kann beispielsweise elektromechanisch, hydraulisch oder pneumatisch angetrieben sein. Die Neigungsvorrichtung soll so eingerichtet sein, dass sie die Sensorfläche je nach Bedarf gegenüber der Längsachse und/oder der Querachse der Messanordnung neigen kann. Dadurch wird erzielt, dass die Neigung der Sensorfläche an die gewünschte Anwendung anpassbar ist und somit die Druckverteilung bei einer simulierten Hanglage eine Ski-Strecke messbar ist. Die typische Hanglage kann je nach Gleitbrett und gewünschtem Einsatzort unterschiedlich sein.

Die Sensorfläche weist eine Längsrichtung und eine Querrichtung auf, wobei das Gleitbrett bevorzugt mit seiner Längsrichtung in Längsrichtung der Sensorfläche auflegbar ist. Im Folgenden sind die Ortsangaben vorne und hinten in Fahrtrichtung des Gleitbrettes definiert.

Die Sensorfläche wird in Längsrichtung und in Querrichtung zumindest überwiegend in Sensorflächenabschnitte aufgeteilt und für jeden Sensorflächenabschnitt mittels eines Kraftsensors, die auf den Sensorflächenabschnitt wirkende Kraft gemessen. Dadurch, dass die Sensorfläche in beide Richtungen in eine Vielzahl von Sensorflächenabschnitten aufgeteilt ist, wird über die Sensorfläche verteilt ortsabhängig die wirkende Kraft bestimmt und als elektrisches Signal ausgegeben. Die Rechnereinheit wertet die elektrischen Signale der einzelnen Sensorflächenabschnitte aus, so dass durch die Rechnereinheit beispielsweise eine ortsaufgelöste Kraftflächenverteilung zu bestimmen ist. Aus der Kraftflächenverteilung lässt sich unter Berücksichtigung der Fläche eines Sensorflächenabschnittes eine Druckverteilung für die gesamte Sensorfläche bestimmen.

Die Aufteilung der Sensorfläche in Längs- und Querrichtung und in eine Vielzahl von Sensorflächenabschnitten bietet den Vorteil, dass es auf diese Weise möglich ist die Kraftflächenverteilung und/oder Druckverteilung, die durch das aufgelegte Gleitbrett erzeugt wird, sowohl in Längs- als auch in Querrichtung des Gleitbrettes ortsaufgelöst zu bestimmen. Vorteilhafterweise lassen sich so Verformungen des Gleitbrettes unter Belastung zweidimensional vermessen. Zur Kundenfreundlichkeit sieht die Erfindung vor, dass das Gleitbrett abschnittsweise von oben mit einem Druck und/oder einer Kraft belastbar ist, den eine Person durch ihr Gewicht erzeugt.

Dadurch, dass die erfindungsgemäße Messanordnung so ausgestaltet ist, dass ein Gleitbrett auflegbar und von einer Person abschnittsweise belastbar ist, ist eine Messung der Kraftflächenverteilung und/oder Druckverteilung realisierbar, die durch eine Kombination aus Person und Gleitbrett erzeugt ist. Der Bereich über der Sensorfläche ist dabei frei, so dass eine Person mit Gleitbrett Platz findet und die Sensorfläche ohne Hindernis betreten kann.

Vorteilhafterweise ermöglicht dies eine individuelle Vermessung eines Gleitbrettes in Abhängigkeit von der Person, die das Gleitbrett belastet, so dass die Messanordnung besonders bevorzugt im Sport- und Ski-Verkaufsgeschäften einzusetzen ist, um eine individuelle Gleitbrettauswahl vornehmen oder das Gleitbrett an die Person anpassen zu können. Insbesondere ermöglicht die Messanordnung auch unmittelbar die Anpassung und Präparierung von Gleitbrettern in Wettkampfsituationen.

Das Gleitbrett kann zumindest ein Fußaufnahmeelement aufweist, das zumindest einen Fuß der Person aufnimmt. Dieses Fußaufnahmeelement ist insbesondere zumindest ein Ski-Schuh, der an dem Gleitbrett angeordnet ist. Diese Ausführung der Erfindung bietet den Vorteil, dass neben den individuellen physiologischen Eigenschaften der Person zusätzlich der Einfluss eines Fußaufnahmeelementes auf die Kraftflächenverteilung und/oder Druckverteilung des Gleitbrettes bestimmbar ist. Auf Basis der ermittelten Kraftflächenverteilung ist dann nicht nur das Gleitbrett, sondern auch das Fußaufnahmeelement individuell auf die Person einstellbar. Dies bietet insbesondere bei der individuellen Kaufberatung in einem Sport und Ski-Verkaufsgeschäft den Vorteil, dass relevante Komponenten optimal vor Ort aufeinander abstimmbar sind. Insbesondere bei Ski-Schuhen, die typischer Weise durch einen Stiefel und eine Bindung zum Gleitbrett gebildet sind, besteht so die Möglichkeit die Druckverteilung durch Einstellung der Bindung und/oder des Stiefels, insbesondere auch durch eine Auswahl oder Modifizierung von Einlegesohlen auf den Anwendungsbereich anzupassen.

In einer besonders bevorzugten Ausführung der Erfindung ist das Gleitbrett ein Skibrett, insbesondere ein Alpinski, ein Langlaufski, ein Snowboard oder ein Sprungski. Die erfindungsgemäße Messanordnung ermöglicht auf diese Weise eine Vermessung von Skibrettern, deren Fahreigenschaft entscheidend von der Druckverteilung abhängt.

Die Sensorflächenabschnitte können beliebige Geometrien aufweisen, wobei kreisförmige, elliptische oder vieleckige Sensorflächenabschnitte vorgesehen sein können. Es hat sich jedoch herausgestellt, dass Sensorflächenabschnitte bevorzugt rechteckig oder quadratisch auszuführen sind und insbesondere eine Breite von 1 mm bis 30 mm aufweisen. Eine bevorzugte Ausführung der Erfindung sieht vor, dass die Sensorfläche einen Druckmessbereich von 0 bis 80 N/cm² besonders bevorzugt 0 bis 40 N/cm² auflöst.

In einer bevorzugten Ausführung sind die Kraftsensoren als Kapazitätssensoren, Resistivsensoren, Piezosensoren und/oder Dünnfilmsensoren ausgeführt. Derartige Sensoren sind flächig ausführbar, so dass eine erfindungsgemäße Sensorfläche aus diesen Sensoren realisierbar ist. Es hat sich herausgestellt, dass insbesondere Kapazitätssensoren im Hinblick auf Sensitivität, Robustheit und großflächige Anwendbarkeit bevorzugt als Kraftsensoren zu verwenden sind.

Bei einer weiteren Ausführungsvariante der Erfindung ist es vorgesehen, dass zumindest ein Laser oberhalb der Druckplatte angeordnet ist. Dieser wird bevorzugt dazu verwendet Informationen, wie den Druckschwerpunkt, die bevorzugte Bein- oder Unterschenkelachse anzuzeigen. Hierfür ist der Laser verfahrbar und/oder schwekbar geführt. Alternativ zur Projektion kann die Druckplatte eine flächige Anzeigeeinheit aufweisen, die beispielsweise als OLED-Folie ausgeführt ist und in der Oberfläche der Druckplatte integriert ist.

Gewichtssensoren werden dazu verwendbar, das Gewicht der Person und/oder der Ausrüstung zu messen. Die Gewichtsmessung wird für die Kalibrierung der Sensorfläche verwendet, wobei drei bis zehn Gewichtssensoren bevorzugt benötigt werden, um das Gewicht der Person und/oder der Ausrüstung genau zu bestimmen. Eine Kalibrierung ist insbesondere notwendig, wenn sich die Empfindlichkeit der Kraftsensoren der Sensorflächenabschnitte in Anhängigkeit von der Zeit ändert. Die Rechnereinheit vergleicht bei dieser Ausführung der Erfindung die durch die Gewichtssensoren bestimmte Gewichtskraft mit der Summe der Kräfte, die über die Sensorflächenabschnitte gemessen werden. Bei einer Abweichung wird die Kraftflächenverteilung so angepasst, dass die Summe der ausgegebenen Kräfte der Gewichtskraft entspricht. Eine Kalibrierung durch die Gewichtssensoren hat den Vorteil, dass mögliche Langzeiteffekte, die eine Auswirkung auf die Sensitivität der Kraftsensoren der Sensorflächen haben, kompensiert werden. Dadurch liefert die erfindungsgemäße Messanordnung bei dauerhaftem Betrieb reproduzierbare Messergebnisse.

Die Erfindung ist dadurch gekennzeichnet, dass die Sensorfläche mittels einer Neigungsvorrichtung gegenüber einer Längsachse und/oder einer Querachse neigbar ist. Dadurch, dass die Sensorfläche gegenüber der Horizontalen geneigt werden kann, lassen sich bestimmte Neigungen einer Ski-Strecke simulieren, so dass auch die Druckverteilung des Skis bei realistischen Bedingungen messbar ist. Insbesondere lässt sich die Neigung in Abhängigkeit des untersuchenden Gleitbretts variieren. Beispielsweise wird ein Langlaufski typischerweise bei geringen Neigung verwendet, wohingegen ein Sprungski bei einer großen Neigung verwendet wird.

Auf der Druckplatte kann eine Oberfläche aufgebracht sein, die insbesondere Gleiteigenschaften aufweist, die im Wesentlichen den von Schnee entsprechen. Auf diese Weise ist die Messanordnung auch für eine Überfahrt geeignet und kann vorteilhafterweise auch für dynamische Messungen des Fahrverhaltens herangezogen werden.

In einer weiteren Ausführung der Erfindung ist das zu untersuchende Sportgerät von einem Fußaufnahmeelement, insbesondere einem Ski-Schuh gebildet. Bei dieser Ausführungsvariante wird die Druckverteilung, die durch einen Ski-Schuh erzeugt ist ohne Gleitbrett gemessen. Auf Grundlage dieser Druckverteilungsmessung wird der Ski-Schuh modifiziert. Insbesondere wird die Sohle des Ski-Schuhs in der Form verändert oder die Auflagefläche abgetragen, um eine möglichst homogene Druckverteilung des Ski-Schuhs zu erzielen. Insbesondere lässt sich durch einen Vergleich zwischen der Druckverteilung des Ski-Schuhs ohne Gleitbrett und der Druckverteilung des Gleitbretts mit Ski-Schuh die Wechselwirkung zwischen beiden Komponenten ermitteln.

Die erfindungsgemäße Messanordnung wird in einem Verfahren so eingesetzt, dass mindestens ein Gleitbrett oder Sportgerät mit seiner Gleitfläche oder Auflagefläche auf eine Sensorfläche gelegt und abschnittsweise von oben mit einem Druck belastet wird, den eine Person durch ihr Gewicht erzeugt, dass eine Kraft, die jeweils auf einen Sensorflächenabschnitt wirkt, in ein elektrisches Signal umgewandelt wird, und dass eine Rechnereinheit aus dem elektrischen Signal der Sensorflächenabschnitte eine Kraftflächenverteilung und/oder eine Druckverteilung bestimmt, die durch das Gleitbrett auf die Sensorfläche ausgeübt wird.

Ein derartiges Verfahren dient dazu, mit der erfindungsgemäßen Messanordnung eine ortsaufgelöste Kraftflächenverteilung und/oder Druckverteilung eines Gleitbrettes in Längs- und Querrichtung zu bestimmen.

Eine weitere verfahrenshafte Ausführung der Erfindung sieht vor, dass die Kraftsensoren, die auf die Sensorflächenabschnitte wirkende Kraft in einem definierten Zeitintervall zu messen, insbesondere wobei die Rechnereinheit eine Impulsflächenverteilung bestimmt. Vorteilhafterweise liegt das Zeitintervall in einem Bereich von 0,1 ms bis 100 ms, beziehungsweise bei einer Messfrequenz von 10 Hz bis 10 kHz, um eine Sprungdynamik oder Laufdynamik mit der erfindungsgemäßen Messanordnung zu detektieren. Besonders bevorzugt ist eine Messfrequenz von 100 Hz bis 10 kHz.

Vorteilhafterweise wird die erfindungsgemäße Messanordnung für eine dynamische Messung verwendbar. Beispielsweise ist es durch die Messung einer Impulsflächenverteilung möglich, die Dynamik beim Absprung eines Skispringers zu untersuchen und auf Basis der Messwerte das Gleitbrett und/oder das Fußaufnahmeelement zu modifizieren, um den Absprung des Skispringers zu optimieren.

Eine Variante des erfindungsgemäßen Verfahrens sieht vor, dass vor der Bestimmung der Kraft-, Druck- und/oder Impulsflächenverteilung die Haltung der Person auf dem Gleitbrett optimiert wird. Dies wird insbesondere vorgenommen in dem eine mittels der Seitenansicht-Kamera gemachte Aufnahme der Person mit einer Soll-Haltungsposition verglichen wird. Auf diese Weise wird sichergestellt, dass die Person, die sich auf dem Gleitbrett befindet, eine Haltung einnimmt, die für dieses Gleitbrett und/oder die Person typisch ist. Vorteilhafterweise wird so die Reproduzierbarkeit der gemessenen Druckverteilungen erhöht. Außerdem lässt sich die Haltung der Person auf die typische Haltung auf dem jeweiligen Gleitbrett einstellen.

In einer ergänzenden Ausführungsvariante der Erfindung wird der Vergleich der aktuellen Haltung der Person mit der Soll-Haltungsposition realisiert, in dem die Soll-Haltungsposition mit der Aufnahme der Person überlagert wird. Auf Grundlage der Überlagerung mit einer Soll-Haltungsposition kann die Person ihre Haltung korrigieren und Ihre Haltung mit Soll-Haltungsposition in Übereinstimmung bringen. Besonders bevorzugt ist es, dass die Aufnahme der Person mittels der Seitenansicht-Kamera auf einer Anzeigeeinheit dargestellt wird, die die Person selber wahrnehmen kann und das in diese Aufnahme die Soll-Haltungsposition eingeblendet wird, so dass die Person Ihre Haltung mit der Soll-Haltungsposition in Übereinstimmung bringen kann. Es kann alternativ auch vorgesehen sein, dass ein Bediener der Messanordnung die Person dabei anleitet ihre Haltung mit der Soll-Haltungsposition in Übereinstimmung zu bringen. Das Einblenden der Soll-Haltungsposition kann bevorzugt mittels eines Augmented-Reality-Verfahrens dargestellt sein.

In einer alternativen Ausführungsvariante des Verfahrens ist angedacht, dass die Sensorfläche vor Bestimmung der Druckverteilung bezüglich Läng- und/oder Querachse geneigt wird. Auf diese Weise ist es möglich die Sensorfläche in eine Position zu bewegen, die der Strecke entspricht für die das Gleitbrett typischerweise einsetzbar ist. Beispielsweise lässt sich eine Neigung einstellen, die der Neigung einer Sprungschanze entspricht, um die Druckverteilung eines Sprungskis optimieren zu können.

Eine weitere alternative Ausführungsvariante des Verfahrens sieht vor, dass die Sensorflächenabschnitte senkrecht zur Sensorfläche bewegt werden, bis alle unterhalb des Gleitbrettes liegenden Sensorflächenabschnitte mit dem Gleitbrett in Kontakt kommen. Insbesondere wird dabei die Strecke gemessen, die die Sensorflächenabschnitte benötigen, um mit dem Gleitbrett in Kontakt zu kommen. Auf diese Weise ist es möglich neben der Messung der Druckverteilung auch die Form des Gleitbrettes bei Belastung zu bestimmen. Insbesondere lässt sich die Form des Gleitbrettes dort messen, wo die Vorspannung des Gleitbrettes so groß ist, dass dieses bei der Auflage auf eine ebene Sensorfläche nicht mit dieser in Kontakt kommen würde.

In einer weiteren Ausführung der Erfindung ist vorgesehen, dass auf Grundlage der durch die Rechnereinheit bestimmten Kraft-, Druck- und/oder Impulsflächenverteilung das Fußaufnahmeelement bei einer Stand-Korrektur eingestellt wird. Insbesondere ist es vorgesehen, dass die Winkelstellung einer Bindung so variiert wird, dass die Druckverteilung optimiert ist. Des Weiteren kann die Stand-Korrektur auch durch Einlegen von individuell angepassten und/oder ausgewählten Flächenelementen, beispielsweise Keilen oder Sohlen, durchgeführt werden.

Alternativ kann auf Grundlage der bestimmten Kraft-, Druck- und/oder Impulsflächenverteilung auch die Druckverteilung des Gleitbrettes durch Vorspannung des Gleitbrettes variiert und auf den Fahrer angepasst werden.

Auf diese Weise lässt sich die erfindungsgemäße Messanordnung dazu verwenden, ein Fußaufnahmeelement individuell auf einen Fahrer anzupassen und zu optimieren. Beispielsweise lässt sich durch eine Veränderung des Fußaufnahmeelements, insbesondere einer Bindung eine Winkelstellung der Unterschenkel so korrigieren, dass die Druckverteilung zur Querachse weitestgehend homogen ist. Dieses Vorgehen bietet den Vorteil, dass das Fußaufnahmeelement im Sport- und Ski-Verkaufsgeschäft individuell auf den Kunden einstellbar ist.

In einer Ausführung wird die Winkelstellung der Bindung auf Grundlage vorher bestimmten Querdruckverteilung korrigiert in dem die Winkelstellung der Bindung bis zur Erreichung eines minimalen Ungleichgewichts der Querdruckverteilung variiert wird. Vorzugsweise wird die Querdruckverteilung dort aufgezeichnet, wo die Fußaufnahmeelemente auf der Sensorfläche aufliegen. Durch die Betrachtung der Querdruckverteilung lässt sich die Winkelstellung der Bindung auf Grundlage der Druckverteilungsmessung auf einfache Weise und unmittelbar korrigieren.

Eine besonders bevorzugte Ausführung der Erfindung sieht vor, dass auf Grundlage der, durch die Rechnereinheit bestimmten, Kraft-, Druck- und/oder Impulsflächenverteilung die Gleitfläche des Gleitbrettes lokal verändert wird, indem Material von der Unterseite des Gleitbrettes lokal abgetragen wird. Die Bestimmung der Kraft-, Druck- und/oder Impulsflächenverteilung macht es auf diese Weise möglich, die Gleitfläche individuell auf die Person anzupassen und damit die Fahreigenschaften eines Gleitbrettes signifikant zu verbessern. Insbesondere ist es auf diese Weise Möglich eine möglichst homogene Druckverteilung zu erzielen.

Eine alternative Ausführung der Erfindung sieht vor, dass auf Grundlage der, durch die Rechnereinheit bestimmten, Kraft-, Druck- und/oder Impulsflächenverteilung die Gleitfläche des Gleitbrettes lokal verändert wird, indem eine äußere Beschichtung in Dicke, Oberflächenstruktur und/oder Zusammensetzung lokal verändert wird.

Durch Veränderung der äußeren Beschichtung, die typischerweise durch eine Wachsschicht gebildet ist, ist es möglich das Gleitbrett individuell zu optimieren. Beispielsweise ermöglicht eine lokale Variation der Beschichtung bei Langlaufskiern sowohl beim Gleiten als auch beim Abstieg eine Optimierung der Lauffläche. So sind bei Langlaufskiern typischerweise die vorderen und hinteren Bereiche glatt, während der mittlere Bereich dagegen mit sogenannten Steighilfen ausgestattet ist. Auf Basis der Messung der Kraftflächenverteilung lassen sich die glatten Abschnitte und die Steighilfen optimal und individuell auf die Gleitfläche verteilen.

Bevorzugte Ausführungsvariante der Erfindung ist dadurch gekennzeichnet, dass zunächst im Bereich des Gleitbrettes, in denen ein Druck-Grenzwert überschritten ist, Material von der Unterseite des Gleitbrettes abgetragen wird, dass anschließende Druckverteilung abermals gemessen wird, und dass äußere Beschichtung aufgetragen wird, sobald man in keinem Bereich des Gleitbrettes der Druck-Grenzwert überschritten ist. Durch ein derartiges iteratives Verfahren wird sichergestellt, dass zunächst die Bereiche bei den eine überdurchschnittliche Druckbelastung vorliegt durch Entfernen von Material bearbeitet werden und anschließend erst eine äußere Beschichtung aufgetragen wird, die ebenfalls lokal variierbar ist. Vorteilhafterweise werden so durch Materialabtrag Druckunterschiede reduziert, die durch eine Veränderung der äußeren Beschichtung nicht auszugleichen wären. Die abschließende aufgetragene äußere Beschichtung kann lokal zur Erzielung besserer Fahreigenschaften in Dicke in Oberflächenstruktur und/oder Zusammensetzung variiert werden.

Eine ergänzende Ausführungsvariante sieht es vor, dass die Oberflächenstruktur der äußeren Beschichtung bei einem Polierschritt modifiziert wird. Insbesondere werden dabei mittels eines Lasers Mikrostrukturen eingeprägt, die die Eigenschaften der Beschichtung lokal variieren. Dies Mikro- und/oder Nanostrukturen sein, die die Reibung der äußeren Beschichtung auf einem Wasserfilm verändern und damit Fahreigenschaften des Gleitbrettes individuell anpassen.

Eine weitere Ausführung der Erfindung sieht vor, dass die Kraft-, Druck und/oder Impulsflächenverteilung verwendet wird, um eine Verformung des Gleitbrettes zu bestimmen, insbesondere wobei eine Verkippung, Eindringtiefe, Torsion und/oder Biegung des Gleitbrettes bestimmt wird.

Die genaue ortsaufgelöste Messung der Kraft-, Druck- und/oder Impulsflächenverteilung ermöglicht es, Verformungen des Gleitbrettes unmittelbar zu messen. Vorteilhafterweise ist die erfindungsgemäße Messanordnung in der Produktion von Gleitbrettern einsetzbar, wobei das Gleitbrett durch einen definierten Druck belastet ist und die Kraftflächenverteilung eine etwaige Verformung des Gleitbrettes unter Belastung bestimmbar macht. So wird beispielsweise eine Torsion des Gleitbrettes dadurch sichtbar, dass die Kraftflächenverteilung im vorderen Teil des Gleitbrettes auf einer anderen Seite ist als am hinteren Teil des Gleitbrettes in Querrichtung ein Maximum aufweist. Auch sind auf diese Weise besonders gewollte Druckzonen, die die Fahreigenschaften eines Alpinski entscheidend beeinflussen, mit einer hohen Ortsauflösung messbar. Beispielsweise ist so der so genannte Rocker-Effekt mess- und/oder beinflussbar.

Eine besonders bevorzugte Ausführung der Erfindung sieht vor, dass die Kraft-, Druck- und/oder Impulsflächenverteilung in zeitlichen Abständen aufgezeichnet und verglichen wird. Auf diese Weise ist es möglich, mit der Messanordnung Verschleißerscheinungen messbar zu machen. Vorteilhafterweise können auf Basis der Messungen gezielte Reparaturen vorgenommen werden. Auch zeitliche Veränderungen in Physiologie der Personen sind mit der Messanordnung bestimmbar.

Die Messvorrichtung kann zumindest einen Inertialsensor aufweisen, wobei dieser Inertialsensor zumindest an ein Gleitbrett anbringbar ist und mit der Rechnereinheit über eine elektrische Leitung oder Funk verbindbar ist. Durch zumindest einen Inertialsensor, der an ein Gleitbrett anbringbar ist, kann eine Verkippung und/oder eine Beschleunigung des Gleitbrettes unabhängig von der Bestimmung einer Kraft-, Druck- und/oder Impulsflächenverteilung bestimmt werden. Dies hat beispielsweise den Vorteil, dass die Druckverteilung des Gleitbrettes bei einer vorgegebenen Winkelstellung bestimmbar ist. Insbesondere bei der Untersuchung von Gleitbrettern, deren Fahreigenschaften durch eine Druckverteilung an den Kanten bestimmt sind, wie beispielsweise bei Carving-Skiern, ist dies von Vorteil, da das Gleitbrett unmittelbar bei einem bestimmten Anstellwinkel untersuchbar ist. Der Inertialsensor ist in einer vorteilhaften Variante der Erfindung dazu verwendbar, die individuelle Fahrcharakteristik einer Person außerhalb des Verkaufsgeschäftes bei der Fahrt zu messen und auf Grundlage dieser Messung in Kombination mit einer Messung der Kraft-, Druck- und/oder Impulsflächenverteilung einen idealen Ski individuell für die Person bereitzustellen.

In einer weiteren Variante der Erfindung wird die Kraft-, Druck- und/oder Impulsflächenverteilung, die die Messanordnung ermittelt als Eingabeparameter für ein Simulationsgerät und/oder eine Spielkonsole verwendet. Eine derartige Ausführung der Erfindung ermöglicht die Steuerung eines Simulationsgerätes über die erfindungsgemäße Messanordnung. Beispielsweise könnte die Messanordnung genutzt werden, um ein Computerspiel zu steuern. Insbesondere ist diese Ausführung der Erfindung dazu geeignet, um das Fahrverhalten der Fahrer zu optimieren und beispielsweise den Absprung von Skispringern gezielt zu verbessern.

In einer weiteren Ausführung der Erfindung ist es vorgesehen, dass aus der Kraft- und/oder Druckverteilung in definierten Zeitabständen ein Schwerpunkt bei der Verteilung bestimmt wird. Damit lässt sich eine Schwankung der Person und damit die Stabilität der Person auf dem Gleitbrett gegenüber der Sensorfläche bestimmen. Diese Angabe ist vorteilhafterweise verwendbar, um ein Gleitbrett in geeigneter Weise mit einer Fußaufnahmeeinheit zu kombinieren, um eine individuelle und möglichst stabiler Konfiguration für die Person zu ermitteln.

Eine alternative Variante der Erfindung sieht vor, dass ergänzend zu den bereits beschriebenen Verfahren im Vorfeld eine Anpassung oder Auswahl des Fußaufnahmeelements vollzogen wird, wobei zunächst eine individuelle Vermessung der Druckverteilung ohne Gleitbrett und Fußaufnahmeelement durchgeführt wird, beispielsweise barfuß. Auf Grundlage der Druckverteilung wird eine Sohle des Fußaufnahmeelements angepasst oder bei Bedarf ein bevorzugtes Fußaufnahmeelement ausgesucht.

Eine Ausführungsform der Erfindung ist im Folgenden anhand von Figuren näher beschrieben. Es zeigen:
- Fig. 1: eine Ausführungsform der erfindungsgemäßen Messanordnung in perspektivischer Ansicht,
- Fig. 2: eine skizzenartige Seitenansicht eines Teils der Messanordnung,
- Fig. 3: eine skizzenartige Hinteransicht eines Teils der Messanordnung,
- Fig. 4a: ein Ablaufdiagramm zur bevorzugten Abfolge von Verfahrensblöcken,
- Fig. 4b: ein Ablaufdiagramm mit zusätzlicher Sensorflächenneigungs-Einstellung und Sensorflächenverformung
- Fig. 5: ein Ablaufdiagramm eines Verfahrens zur Haltungsoptimierung einer Person,
- Fig. 6: ein Ablaufdiagramm eines Verfahrens zur Korrektur der Bindungseinstellung und
- Fig. 7: ein Ablaufdiagramm eines Verfahrens zur Gleitflächen-Optimierung.

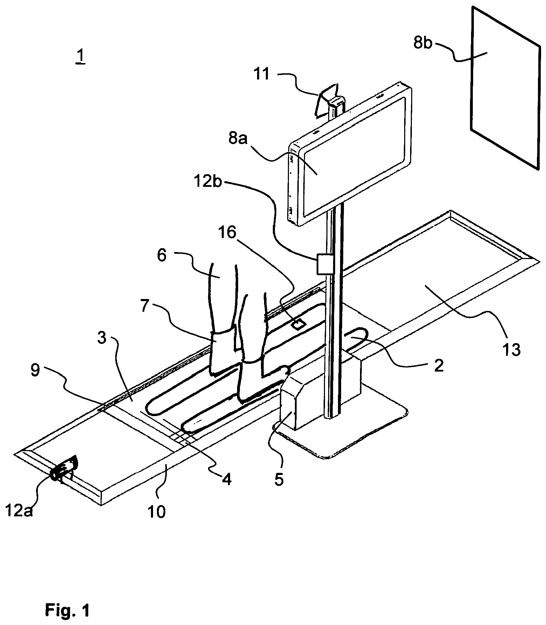

In Fig. 1 ist eine Ausführungsform der erfindungsgemäßen Messanordnung 1 zur Untersuchung von Gleitbrettern 2 in perspektivischer Ansicht dargestellt. Die Messanordnung 1 umfasst eine Sensorfläche 3, die zumindest überwiegend in eine Vielzahl von Sensorflächenabschnitten 4 aufgeteilt ist. Die Sensorflächenabschnitte 4 sind über die gesamte Sensorfläche 3 in Längs- und Querrichtung verteilt, wobei aufgrund der Übersichtlichkeit in Fig. 1 nur ein Teil der Sensorflächenabschnitte 4 dargestellt ist. Jeder der Sensorflächenabschnitte 4 verfügt über einen Kraftsensor, der die auf den Sensorflächenabschnitt 4 wirkende Kraft als elektrisches Signal ausgibt, welches von einer Rechnereinheit 5 ausgewertet wird. Durch die flächige Verteilung der Sensorflächenabschnitte 4 über die Sensorfläche 3 ist es möglich, mittels der Rechnereinheit 5 die Kraftflächenverteilung und/oder Druckflächenverteilung zu bestimmen, die durch das aufgelegte Gleitbrett erzeugt wird.

Wie in der Ausführungsform der Fig. 1 dargestellt, ist das Gleitbrett 2 abschnittsweise mit einem Druck belastbar, der durch das Gewicht einer Person 6 erzeugt ist. Die Messanordnung 1 ermöglicht auf diese Weise die individuelle Messung einer Kraftflächenverteilung und/oder Druckflächenverteilung einer Person 6 in Kombination mit einem Gleitbrett 2. Es kann somit individuell festgestellt werden, ob ein Gleitbrett 2 für eine Person 6 geeignet ist. Zudem kann das die gemessene Kraftflächenverteilung herangezogen werden, um das Gleitbrett an die Person anzupassen.

Das Gleitbrett 2 weist zumindest ein Fußaufnahmeelement 7 auf, das einen Fuß der Person 6 aufnimmt. Wie in Fig. 1 dargestellt, ist das Fußaufnahmeelement 7 bevorzugt ein Ski-Schuh. Das Gleitbrett 2 ist in dieser Ausführungsform ein Skibrett. Die Messanordnung 1 ermöglicht die Messung einer Kraftflächenverteilung und/oder Druckflächenverteilung, die in Kombination von Personen 6, Fußaufnahmeelement 7 und Gleitbrett 2 verursacht ist. Auf Grundlage der gemessenen Kraftflächenverteilung ist deshalb individuell für die Person 6 eine optimale Kombination aus Gleitbrett 2 und Fußaufnahmeelement 7 bestimmbar. Eine Messanordnung 1, wie sie in Fig. 1 dargestellt ist, ist deshalb vorteilhafterweise in einem Sport- oder Ski-Verkaufsgeschäft einsetzbar, wobei unmittelbar vor Ort eine optimale Lösung für den Kunden messtechnisch bestimmbar ist. Die gemessene Kraftflächenverteilung und/oder Druckflächenverteilung kann auch herangezogen werden, um das Gleitbrett 2 und/oder das Fußaufnahmeelement 7 auf die Person anzupassen.

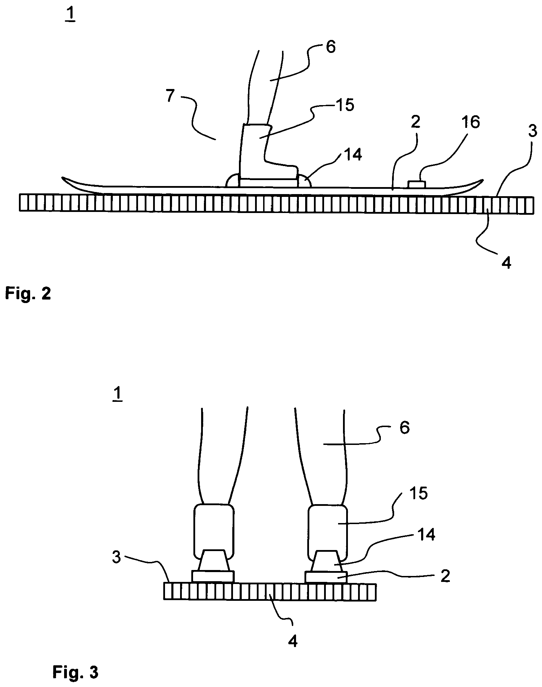

In Fig. 2 ist ein Teil der Messanordnung 1 als Seitenansicht in Längsrichtung dargestellt. Die Messanordnung 1 umfasst eine Sensorfläche 3, die in eine Vielzahl von Sensorflächenabschnitten 4 aufgeteilt ist. Die Sensorflächenabschnitte 4 sind über die gesamte Sensorfläche 3 in Längsrichtung verteilt. Jeder der Sensorflächenabschnitte 4 verfügt über einen Kraftsensor, der die auf den Sensorflächenabschnitt 4 wirkende Kraft als elektrisches Signal ausgibt, das von einer Rechnereinheit 5 ausgewertet wird. Das Gleitbrett 2 ist vorzugsweise als Skibrett ausgeführt, wobei das Fußaufnahmeelement 7 aus einer Bindung 14, die mit dem Gleitbrett 2 in Kontakt ist, und einem Stiefel 15 gebildet ist. Die gemessene Kraft-, Druck,- und/oder Impulsflächenverteilung dient als Grundlage zur individuellen Anpassung der Bindung 14 und/oder des Stiefels 15 an die Person 6 und/oder das Gleitbrett 2.

Die Sensorfläche 3 hat in Längsrichtung eine Länge von 75 cm bis 300 cm und in Querrichtung eine Breite von 40 bis 150 cm. Eine derartige Sensorfläche ermöglicht es, typische Gleitbretter 2 aufzulegen und zu vermessen. Als Skibretter können dabei insbesondere Alpinski, Langlaufski, Snowboards oder Sprungski mittels der Sensorfläche 3 vermessen werden. Die Sensorfläche 3 weist bevorzugt 8 bis 500 Sensorflächenabschnitte 4 pro dm² auf, wobei sich herausgestellt hat, dass 20 bis 200 Flächensegmente pro dm² besonders bevorzugt sind. Eine derartige Sensorflächenabschnitts-Dichte ermöglicht eine ausreichende Ortsauflösung der Kraftflächenverteilung in Längs- und Querrichtung. Dadurch lassen sich individuelle physiologische Unterschiede von Personen messtechnisch zu erfassen. Insbesondere ist eine derartige Ortsauflösung auch ausreichend um produktionsbedingte Verformungen eines Gleitbrettes zu messen.

Die Sensorflächenabschnitte 4 sind bevorzugt rechteckig oder quadratisch ausgeführt und weisen eine Breite von 1 mm bis 30 mm auf. Jeder Sensorflächenabschnitt 4 weist zumindest einen Kraftsensor auf, der als Kapazitätssensor, Resistivsensor, Piezosensor und/oder Dünnfilmsensor ausgeführt ist. Derartige Sensoren ermöglichen eine zuverlässige und robuste Ausführung der Kraftsensoren mit einer Empfindlichkeit, die ausreicht, um typische Drücke, die auf die Gleitfläche des Gleitbrettes 2 ausgeübt werden, zu messen. Die Druckauflösung der Sensorfläche 3 liegt bevorzugt im Bereich von 0 bis 80 N/cm² besonders bevorzugt bei maximal 40 N/cm², um die Drücke auf eine Gleitfläche eines typischen Gleitbretts 2 bei der Belastung mit einem Durchschnittsmenschen optimal zu erfassen. Durch einen solchen Druckmessbereich sind Drücke messbar, die typischerweise von Gleitbrettern, die mit Durchschnittsmenschen belastet sind, auf den Gleitflächen erzeugt werden. Der Druckmessbereich von 0 bis 80 N/cm² ist insbesondere auch ausreichend, um dynamische Belastungen der Gleitflächen zu detektieren.

Wie in Fig. 1 dargestellt, weist die Messanordnung 1 eine Rechnereinheit 5 auf, die mit einer Bedien und ersten Anzeigeeinheit 8a verbunden ist. Die erste Anzeigeeinheit 8a wird dazu verwendet, die Kraftflächenverteilung in unmittelbarer Nähe der Sensorfläche 3 auszugeben. Dadurch ist es vorteilhafterweise möglich, in Sportverkaufsgeschäften vor Ort direkt eine individuelle Beratung vorzunehmen und einen geeignetes Gleitbrett 2 für eine Person 6 auszuwählen. Die Messanordnung 1 weist bevorzugt eine zweite Anzeigeeinheit 8b auf, die in Längsrichtung seitlich vor der Sensorfläche 3 angeordnet ist, wobei eine Normale der der Anzeigefläche der Anzeigeeinheit 8b senkrecht zur Sensorfläche in Richtung zur Person 6 orientiert ist. Auf diese Weise ist die Anzeigeeinheit 8b von der Person 6 wahrnehmbar, so dass diese einer gemessene Druckflächenverteilung oder andere Informationen direkt sehen kann. Die zweite Anzeigeeinheit kann in einer alternativen Ausführungsformen durch eine Projektion oder eine andere Darstellungsmöglichkeit gebildet sein.

Die Messanordnung weist zudem, wie in Fig. 1 dargestellt, neben der Sensorfläche 3 in Längsrichtung, bevorzugt im Rahmen 10, ein segmentiertes Beleuchtungselement 9 auf. Das segmentierte Beleuchtungselement 9 ist dazu verwendbar, eine Sollposition für das Gleitbrett 2 und/oder die Fußaufnahmeelemente 7 optisch durch Farb- und/oder Intensitätsvariation darzustellen. Zudem ist das segmentierte Beleuchtungselement 9 dazu verwendbar, beispielsweise das Maximum der Kraft-, Druck und/oder Impulsflächen in Längsrichtung anzuzeigen.

Die in Fig. 1 dargestellte Ausführungsform der Messanordnung 1 verfügt zudem über einen Projektor 11, der eine Abbildung auf die Sensorfläche 3 projiziert. Der Projektor 11 ist dazu verwendbar, eine Sollposition für das Gleitbrett 2 und/oder ein Fußaufnahmeelement 7 darzustellen. Des Weiteren ist es durch den Projektor 11 möglich, die gemessene Kraft-, Druck und oder Impulsflächenverteilung direkt auf die Sensorfläche 3 zu projizieren und damit für die Person 6 und/oder einen Verkäufer besser wahrnehmbar zu machen.

Die in Fig. 1 dargestellte Messanordnung 1 weist zumindest eine Front-Kamera 12a auf, die bevorzugt seitlich neben der Sensorfläche 3 angeordnet ist und zumindest ein Gleitbrett 2, ein Fußaufnahmeelement 7 und/oder die Person 6 aufnimmt. Die Front-Kamera 12a ist dabei vorzugsweise in Längsrichtung der Sensorfläche 3 orientiert, so dass sie die Gleitbretter 2, die Fußaufnahmeelemente 8 und/oder die Person 7 von vorne und/oder hinten aufnimmt. Eine derartige Anordnung der Front-Kamera 12a ermöglicht es, die gemessene Kraft-, Druck und oder Impulsflächenverteilung mit der Kameraaufnahme zu kombinieren.

Des Weiteren weist die Messanordnung 1 eine zusätzliche Seitenansicht-Kamera 12b auf, die dazu eingerichtet ist die Person 6 von der Seite aufzunehmen. Die Seitenansicht-Kamera 12b wird vorzugsweise dazu verwendet die Haltungsposition der Person 6 auf dem Gleitbrett 2 zu bestimmen und mit einer Soll-Haltungsposition zu vergleichen.

In Fig. 3 ist eine Hinteransicht eines Teils der Messanordnung 1 dargestellt. Diese Ansicht entspricht in einer bevorzugten Ausführung schematisch der Aufnahme der Front-Kamera 12a, die die in Fig. 1 dargestellte Position aufweist. Durch die Aufnahme der Front-Kamera 12a ist beispielsweise feststellbar, ob eine asymmetrische Kraft-, Druck und oder Impulsflächenverteilung in Querrichtung durch physiologische Eigenschaften der Person 6, durch die Einstellung des Fußaufnahmeelementes 7 und/oder durch eine Verformung des Gleitbrettes 2 verursacht ist. Das Fußaufnahmeelement 7 ist dabei durch eine Bindung 14 und einen Stiefel 15 gebildet. Beispielsweise kann die Kameraaufnahme dazu verwendet werden, eine mögliche seitliche Neigung des Unterschenkels und/oder des Stiefels zu messen und bei der Beratung zu berücksichtigen.

In Fig. 1 und Fig. 2 ist eine Ausführung der erfindungsgemäßen Messanordnung 1 dargestellt, die einen zusätzlichen Inertialsensor 16 aufweist. Durch zumindest einen Inertialsensor, der an ein Gleitbrett 2 anbringbar ist, kann eine Verkippung und/oder eine Beschleunigung des Gleitbrettes 2 unabhängig von der Bestimmung einer Kraft-, Druck- und/oder Impulsflächenverteilung bestimmt werden. Beispielsweise ist so auf einfache Weise die Druckverteilung bei einem bestimmten Anstellwinkel, der durch den Inertialsensor gemessen wird, untersuchbar, so dass die Fahreigenschaften von Gleitbrettern 2 untersuchbar sind, deren Fahreigenschaften vorwiegend durch eine Druckverteilung an den Kanten bestimmt sind, wie beispielsweise bei Carving-Skiern.

Die in Fig. 1 dargestellte Messanordnung 1 weist eine flächige Wägeeinheit 13 auf, die zur Kalibrierung der Sensorfläche verwendet wird. Dafür stellt sich die Person zunächst auf die flächige Wägeeinheit 13, wobei von dieser das Gewicht festgestellt wird. Anschließend stellt sich die Person 6 mit dem Gleitbrett 2 auf die Sensorfläche 3. Die gesamte, von der Sensorfläche 3 gemessene Kraft, sollte der Gewichtskraft entsprechen, die durch die Wägeeinheit 13 ermittelt worden ist. Ist dies nicht der Fall, ist eine Anpassung der Kraft-, Druck und oder Impulsflächenverteilung vorzunehmen. Eine derartige Kalibrierung ermöglicht eine dauerhafte reproduzierbare Messung der der Kraft-, Druck und oder Impulsflächenverteilung.

In einer nicht dargestellten Ausführungsvariante der Erfindung, weist die Messanordnung zwischen dem Boden und der Sensorfläche 3 Gewichtssensoren auf. Es hat sich herausgestellt, dass drei bis zehn Sensoren unter der Sensorfläche 3 bevorzugt zu verteilen sind, um eine genaue Gewichtsmessung zu erzielen. Die Gewichtsmessung wird dabei zur Kalibrierung der Sensorfläche verwendet, so dass die Kraftflächenverteilung dauerhaft reproduzierbar zu bestimmen ist. Eine Gewichtsbestimmung während der Messung der Kraft-, Druck und oder Impulsflächenverteilung ermöglicht eine Kalibrierung der Messung während die Sensorfläche mit dem Gleitbrett und dem Fahrer belastet ist und kompensiert auf diese Weise temporäre Schwankungen in der Empfindlichkeit der Kraftsensoren der Sensorflächenabschnitte.

Die Messanordnung 1 weist eine Sensorfläche 3 auf, die mittels einer Neigungsvorrichtung gegenüber einer Längsachse und/oder einer Querachse neigbar ist. Die Neigungsvorrichtung kann beispielsweise elektromechanisch, hydraulisch oder pneumatisch angetrieben sein. Die Neigungsvorrichtung soll so eingerichtet sein, dass sie die Sensorfläche 3 je nach Bedarf gegenüber der Längsachse und/oder der Querachse der Messanordnung 1 neigen kann. Dadurch wird erzielt, dass die Neigung der Sensorfläche 3 an die gewünschte Anwendung anpassbar ist und somit die Druckverteilung bei einer simulierten Hanglage eine Ski-Strecke messbar ist. Die typische Hanglage kann je nach Gleitbrett und gewünschtem Einsatzort unterschiedlich sein. Beispielsweise weist die typische Hanglage eines Langlaufskis eine deutlich geringere Neigung als die typische Hanglage eines Sprungskis auf. Ferner lässt sich durch die Neigung der Sensorfläche 3 und die Aufzeichnung mittels der Seitenansicht-Kamera 12b die Haltung der Person 6 optimieren und für bevorzugte Neigungen eine optimale Position auf dem Gleitbrett erzielen. Vorteilhafterweise ist es so möglich das Gleitbrett 2 nicht nur an die Physiologie der Person 6 anzupassen, sondern auch eine Optimierung bezüglich einer bevorzugten Hanglage erzielen.

Eine weiteren nicht dargestellte Ausführungsvariante der Erfindung zeichnet sich dadurch aus, dass zumindest eine Teilzahl der Sensorflächenabschnitte 4 im Wesentlichen senkrecht zur Sensorfläche 3 unabhängig voneinander bewegbar sind. Die Sensorflächenabschnitte 4 können beispielsweise mittels eines pneumatischen Stempels, einer in der Auslenkung steuerbaren Feder oder mittels einer anderen elektromechanischen Vorrichtung senkrecht zur Sensorfläche 3 bewegt werden. Die Strecke, um die die Sensorflächensegmente 4 bewegt werden, um mit der Gleitfläche des Gleitbretts 2 in Kontakt sind messbar. Auf diese Weise ist es möglich die Teile des Gleitbrettes 2 abzutasten, die sonst aufgrund einer Vorspannung des Gleitbrettes 2 nicht in Kontakt mit der ebenen Sensorfläche 3 gelangen. Somit kann man zusätzlich zur Messung der Druckverteilung auch eine Messung der Verformung des Gleitbrettes 2 bei Belastung durch eine Person 6 heranziehen, um das Gleitbrett 2, das Fußaufnahmeelement 7 und/oder die Haltung der Person 6 auf Grundlage dieser Information zu optimieren. Vorzugsweise sind die senkrecht zur Sensorfläche 3 bewegbaren Sensorflächenabschnitte 4 gegenüber einer Längs- und/oder Querachse der Messanordnung 1 neigbar. Dadurch wird eine Anschmiegung der Sensorfläche 3 an die Gleitfläche des Gleitbrettes 2 erzielt und somit ein Kontakt der Sensorfläche 3 zum Gleitbrett 2 über die gesamte Fläche des Gleitbrettes 2 erzielt.

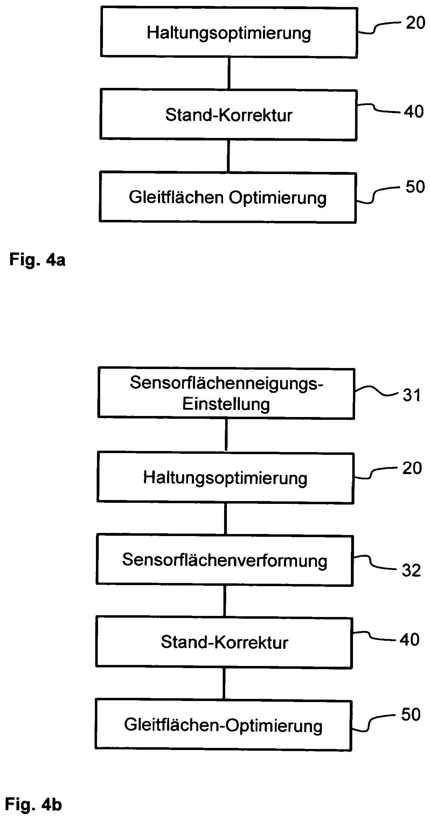

In Fig. 4a ist ein Ablaufdiagramm einer Ausführungsvariante des erfindungsgemäßen Verfahrens dargestellt, wobei zunächst eine Haltungsoptimierung 20 der Person 6 durchgeführt wird, danach eine Stand-Korrektur 40 erfolgt und abschließend eine Gleitflächen-Optimierung 50 durchgeführt wird. Die einzelnen Verfahrensblöcke Haltungsoptimierung 20, Stand-Korrektur 40 und Gleitflächen-Optimierung 50 sind unabhängig voneinander zu betrachten, und können je nach Bedarf in der Reihenfolge getauscht oder ausgelassen werden. Bei der typischen Verwendung der Messanordnung 1 in einem Verkaufsgeschäft ist allerdings der Verfahrensablauf wie er in Fig. 4a dargestellt ist bevorzugt, da vor der Aufnahme einer Druckverteilung zunächst die Haltungsoptimierung 20 der Person 6 erfolgt, um sicher zu gehen, dass die Person 6 eine für die Benutzung des Gleitbrettes 2 typische Haltung einnimmt und damit die Druckverteilung für die entsprechende Anwendung des Gleitbretts bestimmt wird. Beispielsweise unterscheidet sich die Haltung auf einem Langlaufski deutlich von der Haltung auf einem Sprungski . Zudem hat die Erfahrung gezeigt, dass Personen 6 typischerweise in einem Verkaufsraum eine Haltung wählen, die nicht der Haltung auf einer Piste unter realen Bedingungen entspricht. Ist die Haltung der Person 6 optimiert, so kann damit Fortgefahren werden die die Stand-Korrektur 40 durchzuführen, bei der beispielsweise die Bindung 14 zunächst so eingestellt wird, das eine Querdruckverteilung entlang der Querachse der Gleitbretter 2 möglichst konstant über die gesamte Erstreckung des Gleitbrettes 2 in Querrichtung ist, insbesondere an der Position der Fußaufnahmeelemente 7. Sobald die Stand-Korrektur 40 durchgeführt ist, kann damit Fortgefahren werden eine Gleitfläche-Optimierung 50 durchzuführen, bei der auf Grundlage, der durch die Recheneinheit 5 bestimmten Druckverteilung die Gleitfläche des Gleitbrettes 2 lokal verändert wird, um die Fahreigenschaften des Gleitbrettes 2 individuell auf die Person 6 anzupassen. Nachdem die Verfahrensblöcke durchgeführt sind, ist das Gleitbrett 2 im Sinne der Erfindung optimal auf die Person 6 eingestellt.

In Fig. 4b ist eine Erweiterung des in Figur 4a dargestellten Verfahrens gezeigt, wobei das Verfahren durch die Verfahrensblöcke Sensorflächenneigungs-Einstellung 31 und Sensorflächenverformung 32 ergänzt wird. Auch diese Verfahrensblöcke sind grundsätzlich unabhängig voneinander implementierbar und je nach Bedarf einsetzbar. Bei dem in Fig. 4b dargestellten Verfahren wird vor der Haltungsoptimierung 20 die Sensorflächenneigungs-Einstellung 31 durchgeführt, bei der die Neigung der Sensorfläche 3 gegenüber einer Längs- und/oder Querachse der Messanordnung 1 verändert wird. Durch die Veränderung der Neigung kann beispielsweise die typische Hanglage bei der Verwendung eines Gleitbrettes 2 simuliert werden und auf diese Weise die Druckverteilung bei realistischen Bedingungen gemessen werden. Nachdem die Neigung der Sensorfläche 3 den gewünschten Wert einnimmt, wird die Haltung der Person 6 in dem Verfahrensschritt Haltungsoptimierung 20 korrigiert, um für die entsprechende Hanglage eine typische Haltung zu Erzielen. Nachdem die Haltung der Person 6 optimiert ist kann es in der durch Fig. 4b dargestellten Ausführungsvariante des erfindungsgemäßen Verfahrens von Vorteil sein eine Sensorflächenverformung 32 vorzunehmen, bei der die Sensorfläche 3 durch Verschieben der Sensorflächenabschnitte 4 so verformt wird, dass sie mit der gesamten Gleitfläche des Gleitbrettes 2 in Kontakt kommt. Auf diese Weise lässt sich zusätzlich zur Bestimmung der Druckverteilung die Verformung des Gleitbrettes 2 bestimmen, indem man die Distanz misst um die die Sensorflächenabschnitte 4 bewegt werden müssen, um mit dem Gleitbrett 2 in Kontakt zu kommen. Je nach Bedarf kann es auch von Vorteil sein die Sensorflächenverformung 32 nach der Stand-Korrektur 40 oder bei der Gleitflächen-Optimierung 50 vorzunehmen.

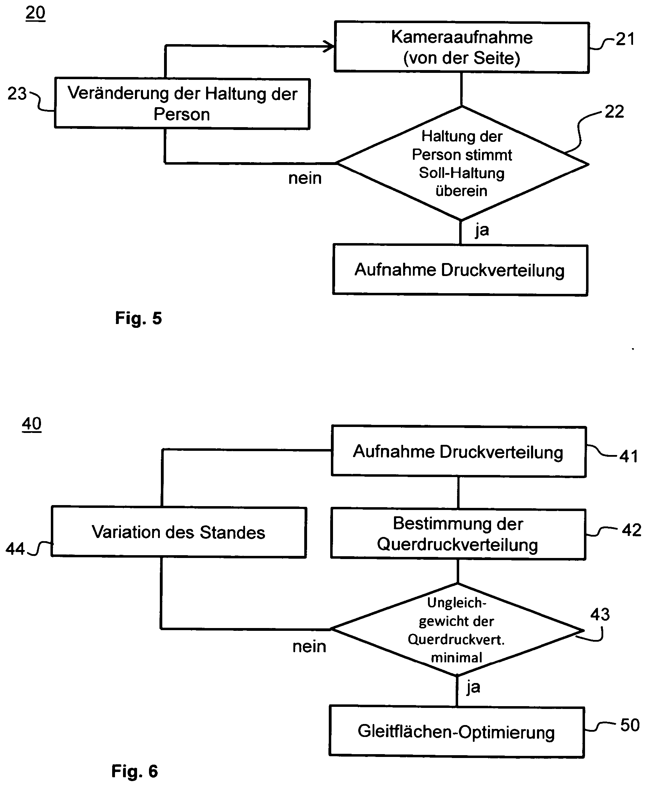

Fig. 5 stellt im Detail im Verfahrensblock der Haltungsoptimierung 20 dar. Zunächst wird mittels der Seitenansicht-Kamera 12b eine Kameraaufnahme 21 von der Person 6 durchgeführt. Im Verfahrensschritt Soll-Haltungsvergleich 22 wird die Haltung der Person 6 auf dem Gleitbrett 2 mit einer Soll-Haltungsposition verglichen. Liegt keine Übereinstimmung zwischen der aktuellen Haltung der Person 6 und der Soll-Haltungsposition vor, so sollte die Person 6 die Haltung solange verändern, bis eine Übereinstimmung vorliegt. Die Haltungsveränderung 23 der Haltung der Person 6 wird dabei durch die Kamera-Aufnahme 21 aufgezeichnet. Liegt eine Übereinstimmung zwischen der Haltung der Person 6 und einer Soll-Haltungsposition vor, so kann mit der Aufnahme einer Druckverteilung vorgefahren werden. Vorzugsweise wird der Soll-Haltungsvergleich 22 der aktuellen Haltung der Person mit der Soll-Haltungsposition realisiert, in dem die Soll-Haltungsposition mit der Aufnahme der Person 6 überlagert wird. Die Kameraaufnahme der Seitenansicht-Kamera 12b sowie die eingeblendete Soll-Haltungsposition werden bevorzugt durch die zweite Anzeigeeinheit 8b dargestellt, so dass die Person 6 ihre Haltung selber mit der Soll-Haltungsposition weitestgehend in Übereinstimmung bringen kann.

Durch Fig. 6 ist der Verfahrensblock der Stand-Korrektur 40 im Detail dargestellt. Zunächst wird eine Aufnahme der Druckverteilung 41 durchgeführt. Anschließend erfolgt eine Bestimmung der Querdruckverteilung 42, wobei diese Querdruckverteilung in Querrichtung des Gleitbrettes 2 an der Position der Fußaufnahmeelemente 7 durchzuführen ist. Auf Grundlage der bestimmten Druckverteilung wird im Rahmen eines Ungleichgewichtsvergleichs 43 festgestellt, ob ein Ungleichgewicht der Druckverteilung vorliegt, respektive ob zwischen dem Maximal- und dem Minimalwert ein bestimmter Grenzwert unterschritten ist. Ist dies nicht der Fall, so wird eine Variation 44 des Standes, insbesondere des Bindungswinkels, durchgeführt und anschließend erneut eine Aufnahme der Druckverteilung 41 durchgeführt. Die Variation des Standes 44 wird solange durchgeführt bis für das Ungleichgewicht der Querdruckverteilung ein Minimalwert erreicht ist. Ist dies der Fall, so kann mit der Gleitflächen-Optimierung 50 fortgefahren werden.

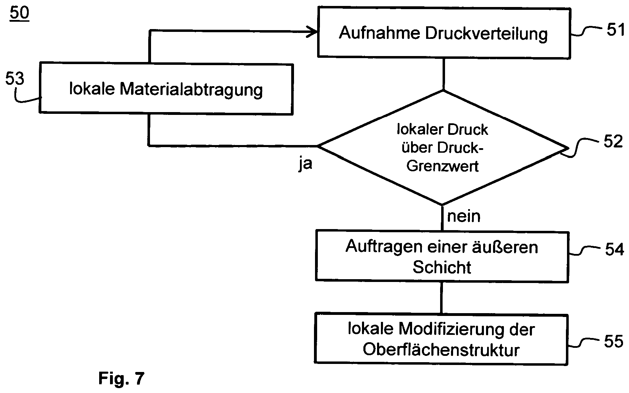

In Fig. 7 ist eine bevorzugte Gleitflächen-Optimierung 50 im Detail dargestellt. Zunächst wird die Aufnahme einer Druckverteilung 51 durchgeführt. Anschließend wird beim Verfahrensschritt Lokladruckvergleich 52 untersucht, ob der lokal durch das Gleitbrett 2 erzeugte Druck Eindruck-Grenzwert übersteigt. Ist der Druckwert überschritten, so wird eine lokale Materialabtragung 53 durchgeführt. Dies kann beispielsweise mittels eines Schleifrades durchgeführt werden, wobei das Schleifrad eine Breite aufweist, die größer als die Erstreckung des Gleitbrettes 2 in Querrichtung ist, so dass eine Abtragungstiefe ausschließlich in Längsrichtung variierbar ist. Bevorzugt ist es ein Abtragungsverfahren anzuwenden, bei dem die Materialabtragungstiefe sowohl in Längsrichtung, als auch in Querrichtung des Gleitbrettes 2 lokal variierbar ist. Auf diese Weise ist auch in Querrichtung eine homogene Druckverteilung erzielbar. Liegt der lokale Druck unter dem Grenzwert, wird eine Schichtauftrag 54 einer äußeren Schicht durchgeführt. Diese äußere Schicht ist bevorzugt eine Wachsschicht, die die Gleiteigenschaften des Gleitbrettes 2 entscheidend beeinflusst. Erfindungsgemäß wird die äußere Beschichtung in Dicke, Oberflächenstruktur und/oder Zusammensetzung lokal verändert, wobei diese Variation auf Grundlage der, durch die Recheneinheit 5 bestimmten Druckverteilung durchgeführt wird. Abschließend kann bei Bedarf einer lokalen Modifizierung der Oberflächenstruktur 55 durchgeführt werden. Nach Abschluss der Gleitflächen-Optimierung 50 sind die Eigenschaften der Gleitfläche des Gleitbrettes 2 insoweit optimiert, das für das jeweilige Gleitbrett 2 mit Fußaufnahmeelement 7 und Bindung 14 individuell für die Person 6 eine optimale Druckverteilung an der Gleitfläche des Gleitbrettes 2 vorliegt.

Die erfindungsgemäße Messanordnung und das Messverfahren ermöglichen die Untersuchung und individuelle Anpassung von Gleitbrettern und/oder Fußaufnahmeelementen durch reproduzierbare Bestimmung und Auswertung einer Kraft-, Druck, und/oder Impulsflächenverteilung eines belasteten Gleitbrettes mit einer hohen Ortauflösung in Längs- und Querrichtung des Gleitbrettes.

Sensorflächenverformung 32 nach der Stand-Korrektur 40 oder bei der Gleitflächen-Optimierung 50 vorzunehmen.

Fig. 5 stellt im Detail im Verfahrensblock der Haltungsoptimierung 20 dar. Zunächst wird mittels der Seitenansicht-Kamera 12b eine Kameraaufnahme 21 von der Person 6 durchgeführt. Im Verfahrensschritt Soll-Haltungsvergleich 22 wird die Haltung der Person 6 auf dem Gleitbrett 2 mit einer Soll-Haltungsposition verglichen. Liegt keine Übereinstimmung zwischen der aktuellen Haltung der Person 6 und der Soll-Haltungsposition vor, so sollte die Person 6 die Haltung solange verändern, bis eine Übereinstimmung vorliegt. Die Haltungsveränderung 23 der Haltung der Person 6 wird dabei durch die Kamera-Aufnahme 21 aufgezeichnet. Liegt eine Übereinstimmung zwischen der Haltung der Person 6 und einer Soll-Haltungsposition vor, so kann mit der Aufnahme einer Druckverteilung vorgefahren werden. Vorzugsweise wird der Soll-Haltungsvergleich 22 der aktuellen Haltung der Person mit der Soll-Haltungsposition realisiert, in dem die Soll-Haltungsposition mit der Aufnahme der Person 6 überlagert wird. Die Kameraaufnahme der Seitenansicht-Kamera 12b sowie die eingeblendete Soll-Haltungsposition werden bevorzugt durch die zweite Anzeigeeinheit 8b dargestellt, so dass die Person 6 ihre Haltung selber mit der Soll-Haltungsposition weitestgehend in Übereinstimmung bringen kann.

Durch Fig. 6 ist der Verfahrensblock der Stand-Korrektur 40 im Detail dargestellt. Zunächst wird eine Aufnahme der Druckverteilung 41 durchgeführt. Anschließend erfolgt eine Bestimmung der Querdruckverteilung 42, wobei diese Querdruckverteilung in Querrichtung des Gleitbrettes 2 an der Position der Fußaufnahmeelemente 7 durchzuführen ist. Auf Grundlage der bestimmten Druckverteilung wird im Rahmen eines Ungleichgewichtsvergleichs 43 festgestellt, ob ein Ungleichgewicht der Druckverteilung vorliegt, respektive ob zwischen dem Maximal- und dem Minimalwert ein bestimmter Grenzwert unterschritten ist. Ist dies nicht der Fall, so wird eine Variation 44 des Standes, insbesondere des Bindungswinkels, durchgeführt und anschließend erneut eine Aufnahme der Druckverteilung 41 durchgeführt. Die Variation des Standes 44 wird solange durchgeführt bis für das Ungleichgewicht der Querdruckverteilung ein Minimalwert erreicht ist. Ist dies der Fall, so kann mit der Gleitflächen-Optimierung 50 fortgefahren werden.

In Fig. 7 ist eine bevorzugte Gleitflächen-Optimierung 50 im Detail dargestellt. Zunächst wird die Aufnahme einer Druckverteilung 51 durchgeführt. Anschließend wird beim Verfahrensschritt Lokladruckvergleich 52 untersucht, ob der lokal durch das Gleitbrett 2 erzeugte Druck Eindruck-Grenzwert übersteigt. Ist der Druckwert überschritten, so wird eine lokale Materialabtragung 53 durchgeführt. Dies kann beispielsweise mittels eines Schleifrades durchgeführt werden, wobei das Schleifrad eine Breite aufweist, die größer als die Erstreckung des Gleitbrettes 2 in Querrichtung ist, so dass eine Abtragungstiefe ausschließlich in Längsrichtung variierbar ist. Bevorzugt ist es ein Abtragungsverfahren anzuwenden, bei dem die Materialabtragungstiefe sowohl in Längsrichtung, als auch in Querrichtung des Gleitbrettes 2 lokal variierbar ist. Auf diese Weise ist auch in Querrichtung eine homogene Druckverteilung erzielbar. Liegt der lokale Druck unter dem Grenzwert, wird eine Schichtauftrag 54 einer äußeren Schicht durchgeführt. Diese äußere Schicht ist bevorzugt eine Wachsschicht, die die Gleiteigenschaften des Gleitbrettes 2 entscheidend beeinflusst. Erfindungsgemäß wird die äußere Beschichtung in Dicke, Oberflächenstruktur und/oder Zusammensetzung lokal verändert, wobei diese Variation auf Grundlage der, durch die Recheneinheit 5 bestimmten Druckverteilung durchgeführt wird. Abschließend kann bei Bedarf einer lokalen Modifizierung der Oberflächenstruktur 55 durchgeführt werden. Nach Abschluss der Gleitflächen-Optimierung 50 sind die Eigenschaften der Gleitfläche des Gleitbrettes 2 insoweit optimiert, das für das jeweilige Gleitbrett 2 mit Fußaufnahmeelement 7 und Bindung 14 individuell für die Person 6 eine optimale Druckverteilung an der Gleitfläche des Gleitbrettes 2 vorliegt.

Die erfindungsgemäße Messanordnung und das Messverfahren ermöglichen die Untersuchung und individuelle Anpassung von Gleitbrettern und/oder Fußaufnahmeelementen durch reproduzierbare Bestimmung und Auswertung einer Kraft-, Druck, und/oder Impulsflächenverteilung eines belasteten Gleitbrettes mit einer hohen Ortauflösung in Längs- und Querrichtung des Gleitbrettes.

### Bezugszeichenliste

- 1: Messanordnung
- 2: Gleitbrett
- 3: Sensorfläche
- 4: Sensorflächenabschnitt
- 5: Rechnereinheit
- 6: Person
- 7: Fußaufnahmeeinheit
- 8a: Bedien- / erste Anzeigeeinheit
- 8b: zweite Anzeigeeinheit
- 9: Beleuchtungselement
- 10: Rahmen
- 11: Projektor
- 12a: Front-Kamera
- 12b: Seitenansicht-Kamera
- 13: Wägeeinheit
- 14: Bindung
- 15: Stiefel
- 16: Inertialsensor
- 20: Haltungsoptimierung
- 21: Kameraaufnahme
- 22: Soll-Haltungsvergleich
- 23: Haltungsveränderung
- 31: Sensorflächenneigungs-Einstellung
- 32: Sensorflächenverformung
- 40: Stand-Korrektur
- 41: Aufnahme Druckverteilung
- 42: Bestimmung der Querdruckverteilung
- 43: Ungleichgewichtsvergleich
- 44: Variation des Standes
- 50: Gleitflächenoptimierung
- 51: Aufnahme Druckverteilung
- 52: Lokaldruckvergleich
- 53: lokale Materialabtragung
- 54: Auftragen einer äußeren Schicht
- 55: lokale Modifizierung der Oberflächenstruktur

## Patentansprüche

1. Messanordnung (1) zur Untersuchung von Gleitbrettern (2) oder flächig aufliegenden Sportgeräten, umfassend eine Sensorvorrichtung auf die zumindest ein Gleitbrett (2) oder Sportgerät auflegbar ist,
**dadurch gekennzeichnet,**
- **dass** die Sensorvorrichtung eine Sensorfläche (3) aufweist, die in eine Vielzahl von Sensorflächenabschnitten (4) in Längs- und Querrichtung zumindest überwiegend aufgeteilt ist,
- **dass** die Sensorflächenabschnitte (4) jeweils zumindest einen Kraftsensor aufweisen, der die auf den Sensorflächenabschnitt (4) wirkende Kraft als ein elektrisches Signal ausgibt, das eine Rechnereinheit (5) auswertet, und
- **dass** die Messanordnung (1) eine Sensorfläche (3) aufweist, die mittels einer Neigungsvorrichtung gegenüber einer Längsachse und/oder einer Querachse neigbar ist.

2. Messanordnung (1) nach Anspruch 1, **dadurch gekennzeichnet, dass** das Gleitbrett (2) abschnittsweise mit einem Druck belastbar ist, wobei eine Person (6) den Druck durch ihr Gewicht erzeugt.

3. Messanordnung (1) nach einem der vorherigen Ansprüche, **dadurch gekennzeichnet, dass** das Gleitbrett (2) ein Skibrett ist, wie ein Alpinski, ein Langlaufski, ein Snowboard oder ein Sprungski.

4. Messanordnung (1) nach einem der vorherigen Ansprüche, **dadurch gekennzeichnet, dass** die Kraftsensoren als Kapazitätssensoren, Resistivsensoren, Piezosensoren und/oder Dünnfilmsensoren ausgeführt sind.

5. Messanordnung (1) nach einem der vorherigen Ansprüche, **dadurch gekennzeichnet, dass** die Messanordnung (1) zumindest einen Inertialsensor (16) aufweist, der an zumindest ein Gleitbrett (2) anbringbar und mit der Rechnereinheit (5) verbindbar ist.

6. Messanordnung (1) nach einem der vorherigen Ansprüche, **dadurch gekennzeichnet, dass** das zu untersuchende Sportgerät von einem Fußaufnahmeelement (7), wie einem Ski-Schuh gebildet ist.

7. Verfahren zur Verwendung einer Messanordnung (1) nach einem der vorherigen Ansprüche,
**dadurch gekennzeichnet,**
- **dass** mindestens ein Gleitbrett (2) oder Sportgerät mit seiner Gleitfläche oder Auflagefläche auf eine Sensorfläche (3) gelegt und abschnittsweise mit einem Druck belastet wird, den eine Person (6) durch ihr Gewicht erzeugt,
**dass** eine Kraft, die jeweils auf einen Sensorflächenabschnitt (4) wirkt, in ein elektrisches Signal umgewandelt wird,
- **dass** eine Rechnereinheit (5) aus den elektrischen Signalen des Sensorflächenabschnitts (4) eine Kraftflächenverteilung und/oder eine personenbezogene Druckverteilung bestimmt, die durch das Gleitbrett (2) auf die Sensorfläche (3) ausgeübt wird, und
- **dass** die Sensorfläche (3) vor Bestimmung der Druckverteilung bezüglich Längs- und/oder Querachse geneigt wird.

8. Verfahren nach Anspruch 7, **dadurch gekennzeichnet, dass** die Kraftsensoren die auf die Sensorflächenanschnitte (4) wirkende Kraft in einem diskreten Zeitintervall messen und die Rechnereinheit (5) daraus eine Impulsflächenverteilung bestimmt.

9. Verfahren nach einem der vorherigen Ansprüche, **dadurch gekennzeichnet, dass** die Sensorflächenabschnitte (4) senkrecht zur Sensorfläche (3) bewegt werden, bis alle unterhalb des Gleitbretts (2) liegenden Sensorflächenabschnitte (4) mit dem Gleitbrett (2) in Kontakt kommen.

10. Verfahren nach einem der vorherigen Ansprüche, **dadurch gekennzeichnet, dass** auf Grundlage der, durch die Rechnereinheit (5) bestimmten, Kraft-, Druck-, und/oder Impulsflächenverteilung die Gleitfläche des Gleitbrettes (2) lokal verändert wird, indem Material von der Unterseite des Gleitbrettes (2) lokal abgetragen wird.

11. Verfahren nach einem der vorherigen Ansprüche, **dadurch gekennzeichnet, dass** auf Grundlage der, durch die Rechnereinheit (5) bestimmten, Kraft-, Druck-, und/oder Impulsflächenverteilung die Gleitfläche des Gleitbrettes (2) lokal verändert wird, indem eine äußerste Beschichtung in Dicke, Oberflächenstruktur und/oder Zusammensetzung lokal verändert wird.

12. Verfahren nach einem der vorherigen Ansprüche, **dadurch gekennzeichnet, dass** zunächst in den Bereichen des Gleitbrettes (2), in denen ein Druck-Grenzwert überschritten ist, Material von der Unterseite des Gleitbrettes (2) abgetragen wird, dass anschließend die Druckverteilung abermals gemessen wird, und dass eine äußere Beschichtung aufgetragen wird, sobald in keinem Bereich des Gleitbrettes (2) der Druck-Grenzwert überschritten ist.

13. Verfahren nach einem der vorherigen Ansprüche, **dadurch gekennzeichnet, dass** die Kraft-, Druck-, und/oder Impulsflächenverteilung verwendet wird, um die Verkippung, die Eindringtiefe, die Verformung, den Lateralplan, die Torsion, die Verkantung und/oder die Biegung des Gleitbrettes (2) zu bestimmen.

## Claims

1. Measuring arrangement (1) for inspecting sliding boards (2) or items of sports equipment lying flat, comprising a sensor device on which at least one sliding board (2) or item of sports equipment is able to be placed,
**characterized**
- **in that** the sensor device has a sensor surface (3) that is at least predominantly divided into a multiplicity of sensor surface sections (4) in the longitudinal and transverse direction,
- **in that** the sensor surface sections (4) each have at least one force sensor that outputs the force acting on the sensor surface section (4) in the form of an electrical signal that is evaluated by a computer unit (5), and
- **in that** the measuring arrangement (1) has a sensor surface (3) that is able to be inclined with respect to a longitudinal axis and/or a transverse axis by way of an inclining device.

2. Measuring arrangement (1) according to Claim 1, **characterized in that** sections of the sliding board (2) are able to be loaded with a pressure, wherein a person (6) generates the pressure through their weight.

3. Measuring arrangement (1) according to either of the preceding claims, **characterized in that** the sliding board (2) is a skiing board, such as an Alpine ski, a cross-country ski, a snowboard or a jump ski.

4. Measuring arrangement (1) according to one of the preceding claims, **characterized in that** the force sensors are configured as capacitive sensors, resistive sensors, piezo sensors and/or thin-film sensors.

5. Measuring arrangement (1) according to one of the preceding claims, **characterized in that** the measuring arrangement (1) has at least one inertial sensor (16) that is able to be attached to at least one sliding board (2) and is able to be connected to the computer unit (5).

6. Measuring arrangement (1) according to one of the preceding claims, **characterized in that** the item of sports equipment to be inspected is formed by a foot-accommodating element (7), such as a ski boot.

7. Method for using a measuring arrangement (1) according to one of the preceding claims,
**characterized**
- **in that** at least one sliding board (2) or item of sports equipment is placed on a sensor surface (3) by way of its sliding surface or bearing surface and a pressure generated by a person (6) through their weight is loaded on sections thereof,
- **in that** a force that acts in each case on a sensor surface section (4) is converted into an electrical signal,
- **in that** a computer unit (5) uses the electrical signals from the sensor surface section (4) to determine a force surface distribution and/or a personal pressure distribution that is exerted on the sensor surface (3) by the sliding board (2), and
- **in that** the sensor surface (3) is inclined with respect to the longitudinal and/or transverse axis prior to the determination of the pressure distribution.

8. Method according to Claim 7, **characterized in that** the force sensors measure the force acting on the sensor surface sections (4) in a discrete time interval and the computer unit (5) determines an impulse surface distribution therefrom.

9. Method according to one of the preceding claims, **characterized in that** the sensor surface sections (4) are moved perpendicular to the sensor surface (3) until all of the sensor surface sections (4) located underneath the sliding board (2) come into contact with the sliding board (2).

10. Method according to one of the preceding claims, **characterized in that** the sliding surface of the sliding board (2) is modified locally, on the basis of the force, pressure and/or impulse surface distribution as determined by the computer unit (5), by locally removing material from the underside of the sliding board (2).

11. Method according to one of the preceding claims, **characterized in that** the sliding surface of the sliding board (2) is modified locally, on the basis of the force, pressure and/or impulse surface distribution as determined by the computer unit (5), by locally modifying an outermost coating in terms of thickness, surface structure and/or composition.

12. Method according to one of the preceding claims, **characterized in that** material is initially removed from the underside of the sliding board (2) in regions of the sliding board (2) in which a pressure limit value is exceeded, **in that** the pressure distribution is then measured once again, and **in that** an outer coating is applied as soon as the pressure limit value is not exceeded in any region of the sliding board (2).

13. Method according to one of the preceding claims, **characterized in that** the force, pressure and/or impulse surface distribution is used to determine the tilting, the penetration depth, the deformation, the lateral plane, the torsion, the canting and/or the bending of the sliding board (2).

## Revendications

1. Ensemble de mesure (1) destiné à l'examen de planches de glisse (2) ou d'équipements sportifs pouvant être placé de manière sensiblement bidimensionnelle, ledit ensemble de mesure comprenant un dispositif de détection sur lequel au moins une planche de glisse (2) ou un équipement sportif peut être placé,
**caractérisé en ce que**
- le dispositif de détection comporte une surface de détection (3) qui est au moins principalement divisée en un grand nombre de portions de surface de détection (4) dans les directions longitudinale et transversale,
- les portions de surface de détection (4) comportent chacune au moins un capteur de force qui délivre la force, agissant sur la portion de surface de détection (4), sous la forme d'un signal électrique qu'une unité informatique (5) évalue, et
- l'ensemble de mesure (1) comporte une surface de détection (3) qui peut être inclinée par rapport à un axe longitudinal et/ou un axe transversal au moyen d'un dispositif d'inclinaison.

2. Ensemble de mesure (1) selon la revendication 1, **caractérisé en ce que** la planche de glisse (2) peut être soumise par portions à une pression, une personne (6) générant la pression par son poids.

3. Ensemble de mesure (1) selon l'une des revendications précédentes, **caractérisé en ce que** la planche de glisse (2) est une planche de ski, telle qu'un ski alpin, un ski de fond, une planche de surf sur neige ou un ski de saut.

4. Ensemble de mesure (1) selon l'une des revendications précédentes, **caractérisé en ce que** les capteurs de force sont réalisés sous forme de capteurs capacitifs, capteurs résistifs, capteurs piézoélectriques et/ou capteurs à couches minces.

5. Ensemble de mesure (1) selon l'une des revendications précédentes, **caractérisé en ce que** l'ensemble de mesure (1) comporte au moins un capteur inertiel (16) qui peut être fixé sur au moins une planche de glisse (2) et qui peut être relié à l'unité informatique (5).

6. Ensemble de mesure (1) selon l'une des revendications précédentes, **caractérisé en ce que** l'équipement sportif à examiner est formé par un élément de réception de pied (7) tel qu'une chaussure de ski.

7. Procédé d'utilisation d'un ensemble de mesure (1) selon l'une des revendications précédentes,
**caractérisé en ce que**
- au moins une planche de glisse (2) ou un équipement sportif est placé avec sa surface de glisse ou surface d'appui sur une surface de détection (3) et est soumise par portions à une pression qu'une personne (6) génère par son poids,
- une force qui agit sur une portion de surface de détection respective (4) est convertie en un signal électrique,
- une unité informatique (5) détermine à partir des signaux électriques de la portion de surface de détection (4) une répartition de surface de force et/ou une répartition de pression, liée à la personne, qui est exercée sur la surface de détection (3) par la planche de glisse (2), et
- la surface de détection (3) est inclinée par rapport à l'axe longitudinal et/ou transversal avant de déterminer la répartition de pression.

8. Procédé selon la revendication 7, **caractérisé en ce que** les capteurs de force mesurent la force, agissant sur les portions de surface de détection (4), dans un intervalle de temps discret et l'unité informatique (5) détermine à partir de là une répartition de surface d'impulsion.

9. Procédé selon l'une des revendications précédentes, **caractérisé en ce que** les portions de surface de détection (4) sont déplacées perpendiculairement à la surface de détection (3) jusqu'à ce que toutes les portions de surface de détection (4) situées sous la planche de glisse (2) entrent en contact avec la planche de glisse (2).

10. Procédé selon l'une des revendications précédentes, **caractérisé en ce que**, sur la base de la répartition de force, de pression et/ou de surface d'impulsion déterminée par l'unité informatique (5), la surface de glisse de la planche de glisse (2) est modifiée localement par enlèvement local de matière de la face inférieure de la planche de glisse (2).

11. Procédé selon l'une des revendications précédentes, **caractérisé en ce que**, sur la base de la répartition de force, de pression et/ou de surface d'impulsion déterminée par l'unité informatique (5), la surface de glisse de la planche de glisse (2) est modifiée localement par modification locale de l'épaisseur, de la structure de surface et/ou de la composition d'un revêtement le plus extérieur.

12. Procédé selon l'une des revendications précédentes, **caractérisé en ce que** de la matière est d'abord enlevée de la face inférieure de la planche de glisse (2) dans les zones de la planche de glisse (2) dans lesquelles une valeur limite de pression est dépassée, **en ce que** la répartition de pression est alors à nouveau mesurée, et **en ce qu'**un revêtement extérieur est appliqué une fois que la limite de pression n'est dépassée dans aucune zone de la planche de glisse (2).

13. Procédé selon l'une des revendications précédentes, **caractérisé en ce que** la répartition de force, de pression et/ou de surface d'impulsion est utilisée pour déterminer l'inclinaison, la profondeur de pénétration, la déformation, le plan latéral, la torsion, le basculement et/ou le fléchissement de la planche de glisse (2).
